# EUROPÄISCHE PATENTANMELDUNG

(11) **EP 3 597 022 A1**
(43) Veröffentlichungstag der Anmeldung: **22.01.2020**
(21) Anmeldenummer: 19172450.9
(22) Anmeldetag: 03.05.2019
(51) Int. Cl.: A01B 49/02, A01B 29/04, A01B 61/04

(54) **LANDWIRTSCHAFTLICHE BODENBEARBEITUNGSMASCHINE SOWIE VERFAHREN ZUR BODENBEARBEITUNG**

(30) Priorität: 16.07.2018 DE 102018211814
(71) Anmelder: Horsch Maschinen GmbH, 92421 Schwandorf (DE)
(72) Erfinder: HORSCH, Philipp, 92421 Schwandorf (DE)
(74) Vertreter: Benninger, Johannes

(57) **Zusammenfassung**

Mit der Erfindung werden eine landwirtschaftliche Bodenbearbeitungsmaschine (10) und ein Verfahren zur Bodenbearbeitung offenbart. Die Bodenbearbeitungsmaschine umfasst zumindest eine Rahmenkonstruktion (12) zum Tragen mehrerer Komponenten, einen Schneidabschnitt (14) zur Zerkleinerung von Pflanzenrückbeständen der der Oberfläche eines zu bearbeitenden Bodens, einen dem Schneidabschnitt (14) in Fahrtrichtung (F) der Bodenbearbeitungsmaschine (10) nachgeordneten Zinkenabschnitt (24) zur Verteilung der zerkleinerten Pflanzenrückstände und zur Einebnung der Oberfläche des Bodens, sowie einen dem Zinkenabschnitt (24) in Fahrtrichtung (F) der Bodenbearbeitungsmaschine (10) nachgeordneten Rückverfestigungsabschnitt (30) zur Rückverfestigung des gelockerten und/oder eingeebneten Bodens. Der Schneidabschnitt (14) umfasst mindestens ein rotierendes Schneidwerkzeug (16), welches über eine Schwinge (20) schwenkbar an die Rahmenkonstruktion (12) gelagert ist.

## Beschreibung

Die vorliegende Erfindung betrifft eine landwirtschaftliche Bodenbearbeitungsmaschine mit den Merkmalen des unabhängigen Anspruchs 1 sowie ein Verfahren zur Bodenbearbeitung mit den Merkmalen des unabhängigen Anspruchs 13.

In der Landwirtschaft werden zahlreiche verschiedene Bodenbearbeitungsmaschinen eingesetzt. Eine häufig verwendete Bauart umfasst einen angehängten Rahmen mit eigenem Fahrwerk und definierter Rahmenbreite, der mittels einer Zugmaschine über den Acker gezogen wird. Solche Bodenbearbeitungsmaschinen können mit diversen Komponenten wie beispielsweise mit Lockerungs- und/oder Schneidwerkzeugen und/oder mit Rückverfestigungswerkzeugen ausgestattet sein.

Eine derartige landwirtschaftliche Bodenbearbeitungsmaschine ist beispielsweise durch die US 8 020 629 B1 offenbart. Die hier offenbarte Maschine umfasst mehrere in Fahrtrichtung aufeinander folgende Reihen mit unterschiedlichen Werkzeugen zur Bodenbearbeitung, wobei diese mehreren Reihen jeweils quer zur Fahrtrichtung der landwirtschaftlichen Maschine angeordnet sind. Eine in Fahrtrichtung angeordnete erste Reihe ist durch Schneidscheiben ausgebildet, an welche sich in Fahrtrichtung eine zweite Reihe mit einer Messerwalze anschließt. Der zweiten Reihe sind in Fahrtrichtung eine dritte Reihe mit einer Striegeleinheit und eine vierte Reihe mit einer Packerwalze nachgeordnet. Mittels der Messerwalze sollen zunächst Pflanzenrückstände auf der Erdoberfläche zerkleinert werden. Anschließend sollen die somit entstandenen Pflanzen- und Erdrückstände mittels der Striegel bzw. mittels der Zinken möglichst gleichmäßig auf dem Ackerboden verteilt werden, so dass sie anschließend mitsamt dem oberflächlichen Erdreich mittels der Packerwalze rückverfestigt werden können.

Nachteilig bei dieser bekannten Bauart von Bodenbearbeitungsmaschinen ist jedoch, dass die Messerwalzen starr am Maschinenrahmen bzw. am Träger eines Maschinenrahmens gelagert und aufgehängt sind, wodurch sich die Messerwalzen nicht an Bodenunebenheiten oder dergleichen anpassen können.

Eine vergleichbare landwirtschaftliche Bodenbearbeitungsmaschine ist zudem durch die EP 2 868 177 B1 offenbart. Die Maschine umfasst hintereinander mehrere quer zur Fahrtrichtung angeordnete Reihen, welche Reihen jeweils mit unterschiedlichen Werkzeugen ausgestattet sind. Eine in Fahrtrichtung angeordnete erste Reihe umfasst eine Messerwalze, an welcher sich in Fahrtrichtung eine zweite Reihe mit Striegel bzw. eine Striegelsektion anschließt. Der zweiten Reihe in Fahrtrichtung nachgeordnet folgen eine dritte Reihe mit einer Messerwalze und eine vierte Reihe mit einer Packerwalze. Die Messerwalze ist über einen Tragarm an dem Rahmen bzw. an die Rahmenkonstrukion der Maschine gelagert, wobei eine solche Lagerung keine Anpassungen an Bodenunebenheiten ermöglicht.

Der Erfindung liegt daher die Aufgabe zugrunde, eine landwirtschaftliche Bodenbearbeitungsmaschine und ein Verfahren zur Bodenbearbeitung zur Verfügung zu stellen, mittels welchen die im Stand der Technik genannten Nachteile überwunden werden, indem sich ein Schneidabschnitt, insbesondere dessen rotierenden Schneidwerkzeuge einer landwirtschaftlichen Maschine auf einfache Art und Weise an Bodenunebenheiten oder dergleichen anpassen kann. Des Weiteren soll die bewegliche und an Bodenunebenheiten vorgesehene Aufhängung der rotierenden Schneidwerkzeuge einen einfachen Aufbau besitzen.

Diese Aufgaben werden durch eine landwirtschaftliche Bodenbearbeitungsmaschine zur Bodenbearbeitung und/oder Aussaat von Verteilgut mit den Merkmalen im Anspruch 1 sowie durch ein Verfahren zur Bodenbearbeitung mit den Merkmalen im Anspruch 13 gelöst. Weitere vorteilhafte Ausgestaltungen und Weiterbildungen der Erfindung sind in den jeweils abhängigen Ansprüchen angegeben.

Zur Lösung der genannten Aufgabe schlägt die Erfindung eine landwirtschaftliche Bodenbearbeitungsmaschine vor. Die landwirtschaftliche Bodenbearbeitungsmaschine kann sowohl als mittels einer Zugmaschine gezogene oder als an einer Zugmaschine angebaute, sog. 3-Punkt Maschine ausgeführt sein. Grundsätzlich ist es jedoch auch nicht ausgeschlossen, dass die landwirtschaftliche Bodenbearbeitungsmaschine Teil einer selbstfahrenden landwirtschaftlichen Maschine ist, was jedoch nicht die typische Ausführungsform solcher Bodenbearbeitungsmaschinen ist, so dass an dieser Stelle nicht näher auf diese alternative Ausführungsvariante eingegangen werden soll.

Die Bodenbearbeitungsmaschine umfasst zumindest eine Rahmenkonstruktion zum Tragen von verschiedenen Komponenten, welche Komponenten insbesondere zur Bodenbearbeitung ausgebildet sind. Die Rahmenkonstruktion kann sich insbesondere aus einem Mittelrahmen und sich jeweils seitlich vom Mittelrahmen erstreckende Maschinenabschnitte zusammensetzen. Die Rahmenkonstruktion dient in erster Linie dazu, eine stabile Stütz- und Haltekonstruktion für die erforderlichen Komponenten, Werkzeuge und Eingriffselemente zur Verfügung zu stellen, mit denen der Boden in der jeweils gewünschten Weise bearbeitet werden soll. Bei den genannten Komponenten kann es sich beispielsweise um eine Vielzahl von Werkzeugen oder Eingriffselementen handeln, welche der Rahmenkonstruktion zugeordnet und welche dort insbesondere in Fahrtrichtung hintereinander angeordnet sein können, wobei die Positionierungen im vorliegenden Zusammenhang auch als Abschnitte bezeichnet werden, die an der Rahmenkonstruktion hintereinander angeordnet sind. Wenn nachfolgend von Abschnitten die Rede ist, so kann mit dieser Definition auch die Anordnung der Werkzeuge oder Eingriffselemente in Reihen gemeint sein, welche Reihen sich quer zur Fahrtrichtung der Bodenbearbeitungsmaschine erstrecken.

Die Bodenbearbeitungsmaschine umfasst weiter zumindest einen Schneidabschnitt zur Zerkleinerung von Pflanzrückständen an der Oberfläche eines zu bearbeitenden Bodens, wobei der zumindest eine Schneidabschnitt einen Teil der oben genannten Komponenten oder Eingriffswerkzeuge bildet. Der zumindest eine Schneidabschnitt kann zur Zerkleinerung von Pflanzenrückständen an der Oberfläche eines zu bearbeitenden Bodens ausgebildet sein. Der zumindest eine Schneidschneidabschnitt kann mindestens eine Reihe mit Komponenten umfassen, welche mindestens eine Reihe quer zur Fahrtrichtung an der Rahmenkonstruktion vorgesehen ist.

Zusätzlich kann die Bodenbearbeitungsmaschine weiterhin zumindest einen dem zumindest einen Schneidabschnitt in Fahrtrichtung nachgeordneten Zinkenabschnitt zur Verteilung der Pflanzenrückstände und zur Einebnung der Oberfläche des Bodens umfassen, wobei der zumindest eine Zinkenabschnitt einen Teil der oben genannten Komponenten oder Eingriffswerkzeuge bildet. Insbesondere kann der zumindest eine Zinkenabschnitt zur Verteilung der Pflanzenrückstände und/oder zur Einebnung der gelockerten Oberfläche des Bodens ausgebildet sein. Der zumindest eine Zinkenabschnitt kann mindestens eine Reihe, vorzugsweise zwei Reihen, mit Komponenten umfassen, welche mindestens eine Reihe quer zur Fahrtrichtung an der Rahmenkonstruktion vorgesehen ist.

Die Bodenbearbeitungsmaschine umfasst weiter zumindest einen dem zumindest einen Schneidabschnitt in Fahrtrichtung nachgeordneten Rückverfestigungsabschnitt zur Rückverfestigung des durch den zumindest einen Schneidabschnitt bearbeiteten und/oder gelockerten Bodens, wobei der mindestens eine Rückverfestigungsabschnitt einen Teil der oben genannten Komponenten oder Eingriffswerkzeuge bildet. Insbesondere kann der Rückverfestigungsabschnitt zur Rückverfestigung des durch den zumindest einen Schneidabschnitt und/oder bearbeiteten und/oder gelockerten Bodens ausgebildet sein. Der zumindest eine Rückverfestigungsabschnitt kann mindestens eine Reihe mit Komponenten umfassen, welche mindestens eine Reihe quer zur Fahrtrichtung an der Rahmenkonstruktion vorgesehen ist.

Sofern dem zumindest einen Schneidabschnitt in Fahrtrichtung zumindest ein Zinkenabschnitt nachgeordnet ist, kann der zumindest eine Rückverfestigungsabschnitt dem zumindest einen Zinkenabschnitt in Fahrtrichtung nachgeordnet sein. Somit kann insbesondere mittels des zumindest einen Rückverfestigungsabschnitt der durch den zumindest einen Schneidabschnitt und/oder Zinkenabschnitt bearbeiteten Boden rückverfestigt werden.

Der zumindest eine Schneidabschnitt umfasst mindestens ein rotierendes Schneidwerkzeug, welches über eine Schwinge schwenkbar an der Rahmenkonstruktion gelagert ist. Das mindestens eine Schneidwerkezug kann typischerweise um horizontale Drehachsen rotieren, die in etwa quer zur Fahrtrichtung der Bodenbearbeitungsmaschine orientiert sind. Über die Schwinge ist das mindestens eine rotierende Schneidwerkzeug frei schwingend aufgehängt, so dass sich das Schneidwerkzeug optimal an Bodenunebenheiten anpassen kann. Vorzugsweise kann der Schneidabschnitt mindestens eine Reihe mit mindestens einem rotierenden Schneidwerkzeug umfassen, welche Reihe quer zur Fahrtrichtung an der Rahmenkonstruktion angeordnet ist.

Es kann vorgesehen sein, dass der Schwinge eine Konsole zugeordnet ist, über welche die Schwinge an die Rahmenkonstruktion gelagert ist. Insbesondere kann es sich bei der Konsole über eine Lagereinheit handeln, über welche die Schwinge mit dem daran rotierenden Schneidwerkzeug beweglich gelagert sein kann.

Es kann sein, dass die Schwinge mittels elastisch verformbarer und eine Vorspannkraft erzeugende Lagerelemente an die Konsole gelagert ist. Die Lagerelemente können beispielsweise Elastomerlager oder Gummischurlager oder dergleichen umfassen. Auch kann vorgesehen sein, dass die Lagerelemente eine Vorspannkraft auf die Schwinge erzeugen, welche Vorspannkraft sich auf das mindestens eine rotierende Schneidwerkzeug übertragen lässt. Durch die durch die Lagerung erzeugte Vorspannkraft kann das mindestens eine rotierende Schneidwerkzeug voreingestellt werden. Auch können die Lagerelemente Überlasten aufnehmen.

Weiter kann es vorgesehen sein, dass die Konsole höhenverstellbar an der Rahmenkonstruktion gelagert ist. Insbesondere kann der Konsole zumindest ein Linearelement zugeordnet sein, so dass die Konsole und damit auch die Schwinge in ihrer Höhe gegenüber der Rahmenkonstruktion verstellt und/oder eingestellt werden kann. Das zumindest eine Linearelement kann beispielsweise als pneumatischer, elektrischer oder hydraulischer Zylinder ausgebildet sein. Alternativ kann das zumindest eine Linearelement auch durch eine Spindel ausgebildet sein, welche Spindel manuell betätigbar bzw. verstellbar oder mittels eines motorisch angetriebenen und/oder betätigbaren Aktors verstellbar ist.

Weiter kann es vorgesehen sein, dass mittels des zumindest einen Linearelements eine Anpresskraft auf das mindestens eine rotierende Schneidwerkzeug erzeugbar ist, welche Anpresskraft variabel einstellbar ist. Bei der Anpresskraft kann es sich um eine Vorspannkraft handeln, mittels welcher das mindestens eine rotierende Schneidwerkzeug vorgespannt und/oder voreingestellt werden kann. Wenn daher nachfolgend von Anpresskraft die Rede soll damit gleichermaßen auch die Vorspannkraft gemeint bzw. umfasst sein. In Abhängigkeit von der Anpresskraft kann das mindestens eine rotierende Schneidwerkzeug jeweils individuell für jede Feldfahrt an die aktuell vorherrschenden Umgebungs- und Feldbedingungen eingestellt werden.

Zusätzlich oder wahlweise kann vorgesehen sein, dass die Anpresskraft in Abhängigkeit von der Breite des mindestens einen rotierenden Schneidwerkzeugs variabel einstellbar und/oder veränderbar ist.

Weiter kann es vorgesehen sein, dass das zumindest eine Linearelement bzw. dessen Steuerung eine mechanische und/oder eine hydraulische Überlastsicherung umfasst. Beispielsweise kann die hydraulische Überlastsicherung einen hydraulischen Federspeicher umfassen. Wahlweise wären auch jegliche weitere mechanische Überlastsicherungen für das zumindest eine Linearelement denkbar. Auch kann vorgesehen sein, dass die Konsole als solche eine Überlastsicherung umfasst, welche hydraulisch und/oder mechanisch ausgebildet sein kann. Als mechanische Überlastsicherungen können sich beispielsweise Elastomerlager, Gummischnüre, Federelemente oder dergleichen eignen. Die Überlastsicherung kann insbesondere dazu dienen, dass das mindestens eine rotierende Schneidwerkzeug beim Auftreffen auf Hindernisse, Steine und/oder sonstigen Gegenständen und/oder Bodenunebenheiten nach oben schwingen und/oder nach oben ausweichen kann, so dass Beschädigungen und/oder Brüche oder dergleichen an dem mindestens einen rotierenden Schneidwerkzeug vermieden werden können.

Vorzugsweise kann die Konsole von vorne oben nach hinten unten orientiert sein, d.h. die Konsole wird jeweils in Fahrtrichtung gezogen. Damit ist gemeint, dass die Konsole in Fahrtrichtung in einer Weise geneigt ist, dass ein sich öffnender Ausrichtungswinkel zwischen einer Bodenoberfläche und einer Längserstreckungsrichtung der Konsole in Fahrtrichtung orientiert ist, womit eine gezogene Ausrichtung der Konsole in eindeutiger Weise definiert ist. Die gezogene Ausrichtung der Konsole ist deshalb zu bevorzugen, da eine geschobene Anordnung beim Auftreffen auf Widerstände im Boden zum Aufbäumen neigen könnte, was zu Nachteilen in der Tiefenführung und zu ungünstigen Effekten hinsichtlich des gewünschten Anpressdrucks der Eingriffswerkzeuge oder Bodenbearbeitungswerkzeuge führen könnte.

Wie bereits erwähnt, kann sich die Rahmenkonstruktion insbesondere aus einem Mittelrahmen und sich jeweils seitlich vom Mittelrahmen erstreckende Maschinenabschnitte zusammensetzen. Vorzugsweise kann sich vom Mittelrahmen eine Vielzahl von Maschinenabschnitte erstrecken. Wahlweise können die sich vom Mittelrahmen seitlich erstreckenden Maschinenabschnitte jeweils klappbar zueinander ausgebildet sein. Sowohl der Mittelrahmen als die Maschinenabschnitte können jeweils einen Schneidabschnitt mit einer Reihe von rotierenden Schneidwerkzeugen umfassen, welche rotierenden Schneidwerkzeuge jeweils über eine Schwinge und einer Konsole an die Rahmenkonstruktion des Mittelrahmens und/oder der Maschinenabschnitte je angeordnet sind. Zusätzlich kann jeder der Maschinenabschnitte zumindest einen Rückverfestigungsabschnitt umfassen, wobei der zumindest eine Rückverfestigungsabschnitt dem zumindest einen Schneidabschnitt in Fahrtrichtung nachgeordnet ist.

Alternativ kann auch vorgesehen sein, dass jeder der Maschinenabschnitte zumindest einen Zinkenabschnitt und zumindest einen Rückverfestigungsabschnitt umfassen, wobei der zumindest eine Zinkenabschnitt dem zumindest einen Schneidabschnitt und der zumindest eine Rückverfestigungsabschnitt dem zumindest einen Zinkenabschnitt in Fahrtrichtung nachgeordnet sind.

Gemäß einem bevorzugten Ausführungsbeispiel der landwirtschaftlichen Bodenbearbeitungsmaschine kann der zumindest eine Schneidabschnitt mindestens zwei rotierende Schneidwerkzeuge umfassen, welche mindestens zwei rotierenden Schneidwerkzeuge jeweils einzeln über eine Schwinge an die Rahmenkonstruktion gelagert sind. Dementsprechend kann der zumindest eine Schneidabschnitt mindestens zwei Reihen mit jeweils rotierenden Schneidwerkzeugen umfassen, welche quer zur Fahrtrichtung an der Rahmenkonstruktion angeordnet sind. Bei dem Ausführungsbeispiel mit zumindest zwei rotierenden Schneidwerkzeugen kann die Lagerung sowie die Aufhängung und Anordnung der Schneidwerkzeuge selbstverständlich wie beim Ausführungsbeispiel der landwirtschaftlichen Bodenbearbeitungsmaschine mit zumindest einem rotierenden Schneidwerkzeug erfolgen bzw. umfasst sein.

Es kann vorgesehen sein, dass die mindestens zwei rotierenden Schneidwerkzeuge in Fahrtrichtung hintereinander angeordnet sind. Wahlweise können die mindestens zwei rotierenden Schneidwerkzeuge in Fahrtrichtung unmittelbar hintereinander angeordnet sein. Auch wäre es denkbar, dass die mindestens zwei rotierenden Schneidwerkezuge in Fahrtrichtung hintereinander und quer zur Fahrtrichtung versetzt zueinander angeordnet sind, wobei Freiräume vermieden und eine ganzflächige Bearbeitung des Bodens möglich ist.

Wahlweise oder zusätzlich können die Schwingen der zumindest zwei rotierenden und in Fahrtrichtung hintereinander angeordneten Schneidwerkezuge über wenigstens ein Koppelelement miteinander gekoppelt werden, wobei durch das wenigsten eine Koppelelemente eine starre oder zumindest teilweise bewegliche Koppelverbindung ausgebildet wird. Bei einer starren Koppelverbindung kann das wenigstens eine Koppelelement beispielsweise eine Strebe, einen Verbindungsarm oder dergleichen umfassen. Bei einer zumindest teilweisen beweglichen Koppelverbindung kann das wenigstens eine Koppelelement ein Federelement, einen elektrisch, hydraulisch oder pneumatisch arbeitenden Zylinder oder dergleichen umfassen.

Sofern zwischen den Schwingen der mindestens zwei rotierenden Schneidwerkzeugen wenigstens eine Koppelverbindung vorliegt, kann es ausreichend sein, dass den gekoppelten Schwingen jeweils nur ein Linearelement zugeordnet ist. Aufgrund der wenigstens einen Koppelverbindung können somit Stellbewegungen des zumindest einen Linearelements auch auf beide Schwingen und somit auf die mindestens zwei rotierenden Schneidwerkzeuge übertragen werden. Dadurch können Komponenten und folglich auch Platz eingespart sowie der Aufbau des Schneidabschnitts vereinfacht werden.

Es kann vorgesehen sein, dass das mindestens eine rotierende Schneidwerkzeug als rotierende Messerwalze oder dergleichen ausgebildet ist. Die Messerwalze kann beispielsweise quer zur Fahrtrichtung orientierte Messer aufweisen, welche Messer geradlinig und/oder spiralförmig verlaufen. Wahlweise können die Messerwalzen einen geschlossenen Grundkörper aufweisen. Bei Ausbildung des zumindest einen Schneidabschnitts mit zumindest zwei Reihen, welche jeweils mit rotierenden Schneidwerkzeugen, insbesondere mit rotierenden Messerwalzen, ausgebildet sind, können die Schneidwerkzeuge identisch oder unterschiedlich ausgebildet sein.

Es kann vorgesehen sein, dass der zumindest eine Zinkenabschnitt zumindest einen Träger umfasst, wodurch eine Reihe ausgebildet wird, welche Reihe sich quer zur Fahrtrichtung der landwirtschaftlichen Bodenbearbeitungsmaschine erstreckt. An dem zumindest einen Träger können Werkzeuge, insbesondere Zinken, angeordnet sein. Vorzugsweise können die Zinken jeweils gleichmäßig zueinander beanstandet am zumindest einen Träger angeordnet sein.

Gemäß einem bevorzugten Ausführungsbeispiel kann der zumindest eine Zinkenabschnitt zumindest zwei in Fahrtrichtung hintereinander angeordnete Träger umfassen, wodurch zumindest zwei Reihen mit Werkzeugen ausgebildet werden, welche zwei Reihen sich quer zur Fahrtrichtung der landwirtschaftlichen Bodenbearbeitungsmaschine erstrecken. Dabei kann es sein, dass die Zinken an den zumindest zwei Trägern quer zur Fahrtrichtung versetzt zueinander oder direkt hintereinander angeordnet sind.

Es kann zudem vorgesehen sein, dass die Zinken als Striegelzinken, Grubberspitzen oder dergleichen ausgebildet sind. Insbesondere kann vorgesehen sein, dass der Winkel der Werkzeuge bzw. der Zinken des zumindest einen Zinkenabschnitts in Bezug auf die Bodenoberfläche des zu bearbeitenden Bodens verändert werden kann, wodurch deren Aggressivität eingestellt werden kann. Zum Einstellen der Winkel der Zinken können weitere Linearelemente vorgesehen sein, welche beispielsweise als pneumatische, hydraulische oder elektrische Zylinder ausgebildet sein können. Das Einstellen der Winkel kann automatisch oder manuell erfolgen.

Weiter kann es vorgesehen sein, dass der zumindest eine Rückverfestigungsabschnitt zur Rückverfestigung des gelockerten Bodens zumindest eine, zwei oder mehr rotierende Packerwalzen umfasst. Die Packerwalzen sind typischerweise heckseitig an der Bodenbearbeitungsmaschine angeordnet, wobei gegebenenfalls eine schwenkbare und/oder höhenverstellbare Lagerung der Packerwalzen sinnvoll sein kann, beispielsweise im Zusammenhang mit einer Höhenverstellbarkeit des gesamten Maschinenrahmens zur Variation der Eingriffstiefe der übrigen Bodenbearbeitungskomponenten im zu bearbeitenden Boden. Die wenigstens eine heckseitig an der Maschine angeordnete Packerwalze kann beispielsweise eine Mehrzahl von zueinander beabstandeten Packerringen aufweisen. Wahlweise kann der Rückverfestigungsabschnitt auch Packerreifen oder dergleichen Packerwerkzeuge umfassen.

Wie bereits erwähnt, kann es als weitere Option vorgesehen sein, dass der zumindest eine Zinkenabschnitt und/oder der zumindest eine Rückverfestigungsabschnitt an der Rahmenkonstruktion höhenverstellbar ausgebildet sind, wobei insbesondere die zumindest eine Packerwalze und/oder der zumindest eine Zinken höhenverstellbar an der Rahmenkonstruktion angebracht sind. Zur Höhenverstellung des zumindest einen Zinkenabschnitts und/oder des zumindest einen Rückverfestigungsabschnitts können weitere Linearelemente vorgesehen sein, welche beispielsweise als pneumatische, hydraulische oder elektrische Zylinder ausgebildet sein können.

Auch kann vorgesehen sein, dass dem zumindest einen Schneidabschnitt in Fahrtrichtung Tiefenführungsräder vorgeordnet sind und/oder dass zwischen dem Schneidabschnitt und/oder dem Zinkenabschnitt in Fahrtrichtung Tiefenführungsräder angeordnet bzw. zugeordnet sind und/oder dass in den Schneidabschnitt und/oder den Zinkenabschnitt Tiefenführungsräder integriert sind.

Gemäß einer Weiterbildung der Erfindung können der Bodenbearbeitungsmaschine Elemente und/oder Komponenten zur Ausbringung von Saatgut, insbesondere zur Ausbringung von Mikrogranulaten, zugeordnet sein. Dementsprechend kann die Maschine zumindest einen Vorratstank umfassen, mittels welchen das Saatgut mitgeführt und bevorratet werden kann. Unterhalb des Vorratstanks kann zumindest eine Dosiervorrichtung vorgesehen sein, so dass das im Vorratsbehälter mitgeführte und bevorratete Saatgut aus dem Vorratsbehälter entnommen und direkt in einzelne Leitungen entsprechend dosiert bzw. verteilt werden kann. In den Leitungen kann jeweils ein Luftvolumenstrom herrschen, welcher durch ein Gebläse, vorzugsweise durch ein Radialgebläse erzeugt wird. Der durch das Gebläse erzeugte Luftvolumenstrom kann als Trägermedium dienen, so dass durch Zumischen und/oder Beimischen von Saatgut in den Luftvolumenstrom der einzelnen Leitung ein Saatgut-Luftvolumenstrom ausgebildet werden kann. Das Leitungssystem bzw. die einzelnen Leitungen können in bodennahe oder im Boden geführte Ausbringelemente münden, mittels welchen das Saatgut in den Boden ausgebracht werden kann. Die Ausbringelemente können vorzugsweise in Fahrtrichtung vor und/oder nach dem Rückverfestigungsabschnitt angeordnet sein. Damit kann in nur einem Arbeitsgang sowohl eine Bodenbearbeitung als auch eine Aussaat von Saatgut erfolgen.

Weiter kann es vorgesehen sein, dass der Bodenbearbeitungsmaschine eine Steuereinrichtung zugeordnet ist, über welche eine Ansteuerung des zumindest einen Linearelements und/oder der weiteren genannten Linearelemente und/oder Stellelemente oder dergleichen möglich ist.

Die Erfindung umfasst weiter ein Verfahren zur Bodenbearbeitung, welches zumindest die folgenden Schritte umfasst: Zunächst erfolgt ein Zerkleinern von Pflanzenrückständen an der Oberfläche eines zu bearbeitenden Bodens mittels zumindest eines Schneidabschnittes, welcher mindestens ein rotierendes Schneidwerkzeug umfasst, welches Schneidwerkzeug über eine Schwinge an die Rahmenkonstruktion gelagert ist. Der Schwinge kann eine Konsole zugeordnet sein, über welche die Schwinge mit dem rotierenden Schneidwerkzeug an die Rahmenkonstruktion gelagert ist.

In einem nächsten Schritt kann wahlweise ein Verteilen von Pflanzenrückständen und ein Einebnen der Oberfläche des Bodens mittels eines dem Schneidabschnitt in Fahrtrichtung folgenden bzw. nachgeordneten Zinkenabschnitts erfolgen.

In einem weiteren Schritt erfolgt ein Rückverfestigen des gelockerten Bodens eines dem Schneidabschnitt oder wahlweise eines dem Zinkenabschnitt in Fahrtrichtung folgenden bzw. nachgeordneten Rückverfestigungsabschnittes.

Weiter kann es vorgesehen sein, dass mindestens ein rotierendes Schneidwerkzeug bereitgestellt wird, welches Schneidwerkzeug über eine Schwinge und einer der Schwinge zugeordneten Konsole an eine Rahmenkonstruktion einer landwirtschaftlichen Bodenbearbeitungsmaschine gelagert ist. Über die Schwinge kann das mindestens eine rotierende Schneidwerkzeug frei pendeln und sich an Bodenunebenheiten anpassen.

Anschließend kann zumindest ein Stellelement angesteuert werden, so dass die Höhe des rotierenden Schneidwerkzeugs gegenüber der Rahmenkonstruktion bzw. in Bezug auf den zu bearbeitenden Boden eingestellt wird. Dabei kann zugleich die Anpresskraft des mindestens einen rotierenden Schneidwerkzeugs in Bezug auf den zu bearbeitenden Boden eingestellt und angepasst werden.

Hinsichtlich aller oben erwähnten Aspekte und Ausführungsvarianten der erfindungsgemäßen Bodenbearbeitungsmaschine sei an dieser Stelle darauf hingewiesen, dass diese Aspekte und Charakteristika gleichermaßen Teil des erfindungsgemäßen Verfahrens zur Bodenbearbeitung sein und/oder Anwendung auf das erfindungsgemäße Verfahren finden können. Wenn daher an irgend einer Stelle der obigen Beschreibung von bestimmten Aspekten und Varianten der Bodenbearbeitungsmaschine die Rede ist, so sind diese Aspekte und Ausführungsvarianten gleichermaßen auf das Verfahren zur Bodenbearbeitung zu lesen und sollen auch in dieser Weise verstanden werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt in einer schematischen Ansicht eine Ausführungsform der landwirtschaftlichen Bodenbearbeitungsmaschine.
Figur 2 zeigt in einer schematischen Ansicht eine weitere Ausführungsform der landwirtschaftlichen Bodenbearbeitungsmaschine.
Figur 3 zeigt in einer schematischen Ansicht eine weitere Ausführungsform der landwirtschaftlichen Bodenbearbeitungsmaschine.
Figur 4 zeigt eine schematische Ansicht eine Ausführungsform der Schwinge mit Konsole und rotierendem Schneidwerkzeug.
Figur 5A zeigt eine Ausführungsform eines Hydraulikschaltplans zur Ansteuerung von Linearelementen, wie sie zur Verstellung von Bodenbearbeitungswerkzeugen der landwirtschaftlichen Bodenbearbeitungsmaschine eingesetzt werden können.
Figur 5B zeigt eine weitere Ausführungsform eines Hydraulikschaltplans zur Ansteuerung von Linearelementen.
Figur 5C zeigt eine dritte Ausführungsvariante eines Hydraulikschaltplans zur Ansteuerung von Linearelementen.
Figur 5D zeigt eine vierte Ausführungsvariante eines Hydraulikschaltplans zur Ansteuerung von Linearelementen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die landwirtschaftliche Bodenbearbeitungsmaschine ausgestaltet sein kann und stellen keine abschließende Begrenzung dar.

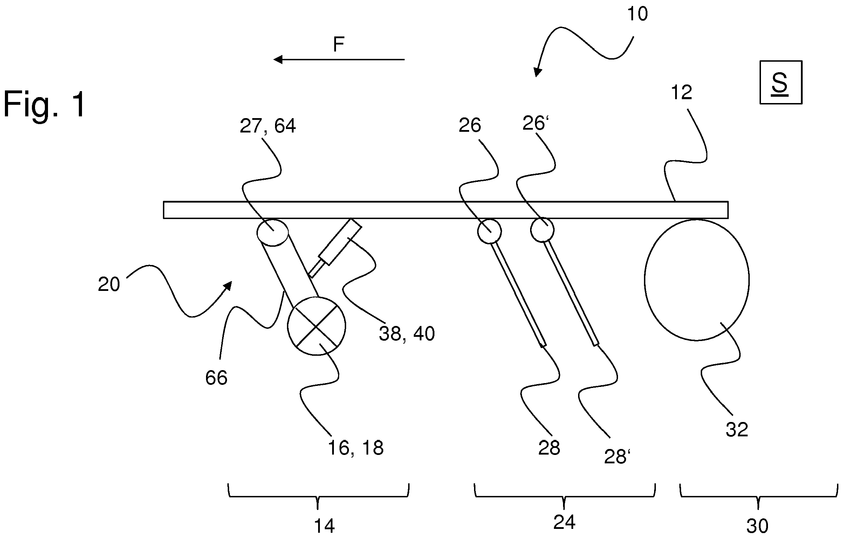

Die Figur 1 zeigt in einer schematischen Ansicht eine Ausführungsvariante einer landwirtschaftlichen Bodenbearbeitungsmaschine 10 mit einer Rahmenkonstruktion 12 zum Tragen der jeweiligen Komponenten. Die Rahmenkonstruktion 12 umfasst einen hier nicht dargestellten Mittelrahmen sowie zwei ebenfalls hier nicht dargestellte sich jeweils seitlich an den Mittelrahmen erstreckende Maschineabschnitte, welche gegenüber dem Mittelrahmen verschwenkbar ausgebildet sind. Insbesondere sind die seitlichen Maschinenabschnitte jeweils gegenüber dem Mittelrahmen um circa 90° verschwenkbar ausgebildet, so dass für eine Transportfahrt auf Straßen die Gesamtbreite der Maschine 10 reduziert werden kann. Zum Verschwenken der Maschinenabschnitte sind jeweils hier nicht dargestellte Stellelemente vorgesehen, welche als elektrisch, hydraulisch oder pneumatisch arbeitende Zylinder ausgebildet sind.

Zur Anbindung der Bodenbearbeitungsmaschine 10 an ein hier nicht dargestelltes Zugfahrzeug umfasst der Mittelrahmen in Fahrtrichtung F vorderseitig eine hier nicht dargestellte Zugdeichsel. Zudem ist dem Mittelrahmen in Fahrtrichtung F vorderseitig ein ebenfalls hier nicht dargestelltes Fahrwerk zugeordnet, welches Räder oder Paare von Rädern umfasst. Das Fahrwerk ist gegenüber dem Mittelrahmen verschwenkbar ausgebildet, so dass das Fahrwerk für eine Straßenfahrt abgesenkt und für eine Feldfahrt angehoben wird. Hierzu können hier nicht dargestellte Stellelemente in Form von weiteren elektrischen, pneumatischen oder hydraulischen Zylindern vorgesehen sein. Zusätzlich können an den Maschinenabschnitten vorderseitig hier nicht dargestellte Tiefenführungsräder für die Einhaltung der Arbeitstiefe und zur Anpassung an das Gelände vorgesehen sein.

Die landwirtschaftliche Bodenbearbeitungsmaschine 10 ist in zumindest drei Abschnitte unterteilt. Die Bodenbearbeitungsmaschine 10 umfasst in Fahrtrichtung F zunächst einen Schneidabschnitt 14, welcher zur Zerkleinerung von Pflanzenrückbeständen an der Oberfläche eines hier nicht dargestellten Bodens ausgebildet ist. Der Schneidabschnitt 14 umfasst zumindest eine Reihe mit einem rotierenden Schneidwerkzeug 16. Die zumindest eine Reihe mit dem rotierenden Schneidwerkzeug 16 erstreckt sich vorzugsweise quer zur Fahrtrichtung entlang der Breite der Rahmenkonstruktion 12.

Die Bodenbearbeitungsmaschine 10 umfasst weiter zumindest einen dem Schneidabschnitt 14 in Fahrtrichtung F nachgeordneten Zinkenabschnitt 24, welcher zur Zerkleinerung der Pflanzenrückbestände und zur Einebnung der Oberfläche eines hier nicht dargestellten Bodens ausgebildet ist. Der Zinkenabschnitt 24 umfasst zumindest zwei in Fahrtrichtung F hintereinander angeordnete Träger 26, 26'; d.h. der Zinkenabschnitt 24 umfasst Reihen, welche jeweils quer zur Fahrtrichtung F der Bodenbearbeitungsmaschine 10, insbesondere an der Rahmenkonstruktion 12, angeordnet sind. An den Trägern 26, 26' sind jeweils Zinken 28, 28' in einem gleichmäßigen Abstand zueinander angeordnet. Bei den Zinken 28, 28' kann es sich beispielsweise um Striegelzinken oder Grubberspitzen oder dergleichen handeln. Vorzugsweise sind die in Fahrtrichtung F hintereinander angeordneten Zinken 28, 28' quer in Fahrtrichtung F versetzt zueinander angeordnet, wodurch folglich keine Freiräume bei der Bodenbearbeitung entstehen und eine ganzflächige Bearbeitung des Bodens möglich ist. Insbesondere ist auch der Winkel der Zinken 28, 28' einstellbar, wodurch deren Aggressivität verstellt werden kann. Zum Einstellen der Winkel können hier nicht dargestellte Linearelemente vorgesehen sein, welche beispielsweise als pneumatische, hydraulische oder elektrische Zylinder ausgebildet sein können. Das Verstellen der Winkel kann automatisch oder manuell erfolgen.

Die Bodenbearbeitungsmaschine 10 umfasst weiter zumindest einen dem Zinkenabschnitt 24 in Fahrtrichtung F nachgeordneten Rückverfestigungsabschnitt 30, welcher zur Rückverfestigung des (hier nicht dargestellten) gelockerten Bodens ausgebildet ist. Der Rückverfestigungsabschnitt 30 umfasst zumindest eine Reihe quer zur Fahrtrichtung, welche durch eine Packerwalze 32 ausgebildet ist.

Die Zinken 28, 28' und/oder die Packerwalze 32 sind höhenverstellbar zur Rahmenkonstruktion 12 ausgebildet und angebracht. Zur Einstellung der Höhe der Zinken 28, 28' und/oder der Packerwalze 32 können hier nicht dargestellte weitere Linearelemente beispielsweise in Form von elektrischen, pneumatischen oder hydraulischen Zylindern oder dergleichen vorgesehen sein. Das Verstellen der Höhe kann automatisch oder manuell erfolgen.

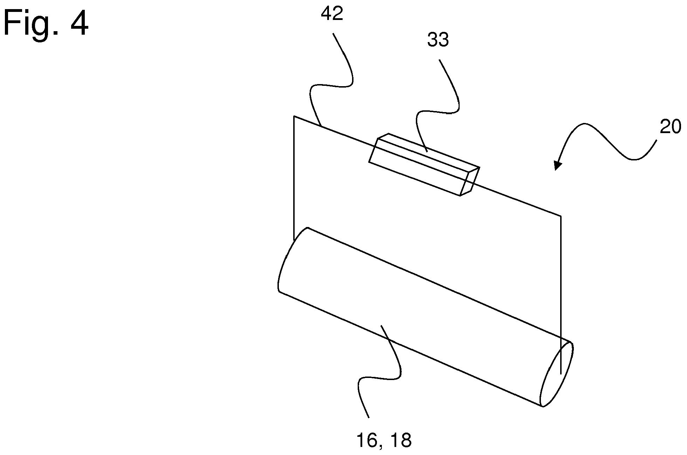

Das rotierende Schneidwerkzeug 16 ist Form von einer rotierenden Messerwalze 18 ausgebildet. Die Messerwalze 18 ist an eine Schwinge 20 montiert, welche Schwinge 20 über eine Konsole 22 (vgl. Figur 4) an die Rahmenkonstruktion 12 der Maschine 10 gelagert ist. Insbesondere ist die Konsole 22 über einen Tragarm 66 an die Rahmenkonstruktion 12 bzw. an einen weiteren Träger 27 der Rahmenkonstruktion 12 gelagert, wo eine Lagereinheit 64 ausgebildet wird. Die Konsole 22 ist mittels eines Linearelements 28 höhenverstellbar an der Rahmenkonstruktion 12 gelagert, wobei das Linearelement 28 einen elektrischen, pneumatischen oder hydraulischen Zylinder 40 umfasst. Mittels des Linearelements 38 ist es zudem möglich, die Vorspannkraft bzw. Anpresskraft auf die Messerwalze 18 variabel zu verstellen und/oder einzustellen. Damit kann die Messerwalze 18 auf die jeweiligen vorherrschenden Umgebungs- und Bodenbedingungen individuell eingestellt werden, um eine optimierte Bodenbearbeitung zu erreichen. Auch kann die Vorspannkraft bzw. Anpresskraft in Abhängigkeit von der Breite der Messerwalzen 18 angepasst und/oder variabel verändert werden.

Die Bodenbearbeitungsmaschine 10 umfasst eine Steuereinrichtung S, über welche insbesondere das zumindest eine Linearelement 38 sowie die weiteren hier nicht dargestellten Linearelemente bzw. Zylinder oder dergleichen angesteuert werden.

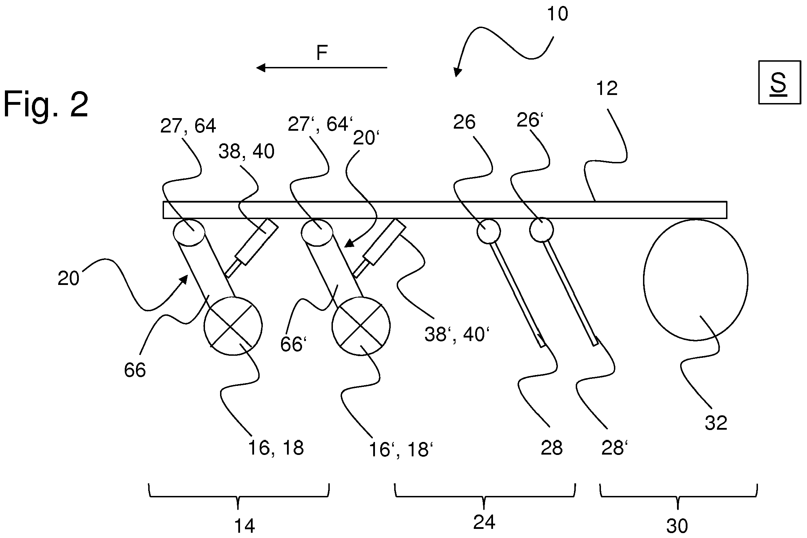

In der Figur 2 ist in einer schematischen Ansicht eine weitere Ausführungsform der landwirtschaftlichen Bodenbearbeitungsmaschine 10 dargestellt. Die in Figur 2 dargestellte Bodenbearbeitungsmaschine 10 umfasst im Grunde einen ähnlichen Aufbau wie die in Figur 1 gezeigte landwirtschaftliche Bodenbearbeitungsmaschine 10, wobei lediglich der in Fahrtrichtung F zunächst angeordnete Schneidabschnitt 14 unterschiedlich ausgebildet ist. So umfasst der Schneidabschnitt 14 zumindest zwei Reihen, welche jeweils mit einem rotierenden Schneidwerkzeug 16, 16' ausgestattet sind. Die zumindest zwei Reihen mit den rotierenden Schneidwerkzeugen 16, 16' erstrecken sich vorzugsweise quer zur Fahrtrichtung F entlang der Breite der Rahmenkonstruktion 12 und sind in Fahrtrichtung F hintereinander, insbesondere in Fahrtrichtung F beabstandet zueinander ausgebildet. Die rotierenden Schneidwerkzeuge 16, 16' können jeweils unmittelbar hintereinander angeordnet sein. Auch wäre es denkbar, dass die mindestens zwei rotierenden Schneidwerkezuge 16, 16' in Fahrtrichtung F hintereinander sowie quer zur Fahrtrichtung F versetzt zueinander angeordnet sind, wobei Freiräume vermieden und eine ganzflächige Bearbeitung des Bodens möglich ist.

Die rotierenden Schneidwerkzeuge 16, 16' sind jeweils in Form von rotierenden Messerwalzen 18, 18' ausgebildet. Die Messerwalzen 18, 18' sind jeweils an eine Schwinge 20, 20' montiert, welche Schwinge 20, 20' jeweils über eine Konsole 22 an die Rahmenkonstruktion 12 der Maschine 10 gelagert ist. Insbesondere ist die Konsole 22 jeweils über einen Tragarm 66, 66' an die Rahmenkonstruktion 12 bzw. an einen weiteren Träger 27, 27' der Rahmenkonstruktion 12 gelagert, wo jeweils eine Lagereinheit 64, 64' ausgebildet wird. Die Konsole 22 ist jeweils mittels eines Linearelements 38, 38' höhenverstellbar an der Rahmenkonstruktion 12 gelagert, wobei das Linearelement 38, 38' einen elektrischen, pneumatischen oder hydraulischen Zylinder 40, 40' umfasst. Mittels des Linearelements 38, 38' ist es zudem möglich, die Vorspannkraft bzw. Anpresskraft auf die Messerwalzen 18, 18' variabel zu verstellen und/oder einzustellen. Damit können die Messerwalzen 18, 18' auf die jeweiligen vorherrschenden Umgebungs- und Bodenbedingungen individuell eingestellt werden, um eine optimierte Bodenbearbeitung zu erreichen. Auch kann die Vorspannkraft bzw. Anpresskraft in Abhängigkeit von der Breite der Messerwalzen 18, 18' angepasst und/oder variabel verändert werden.

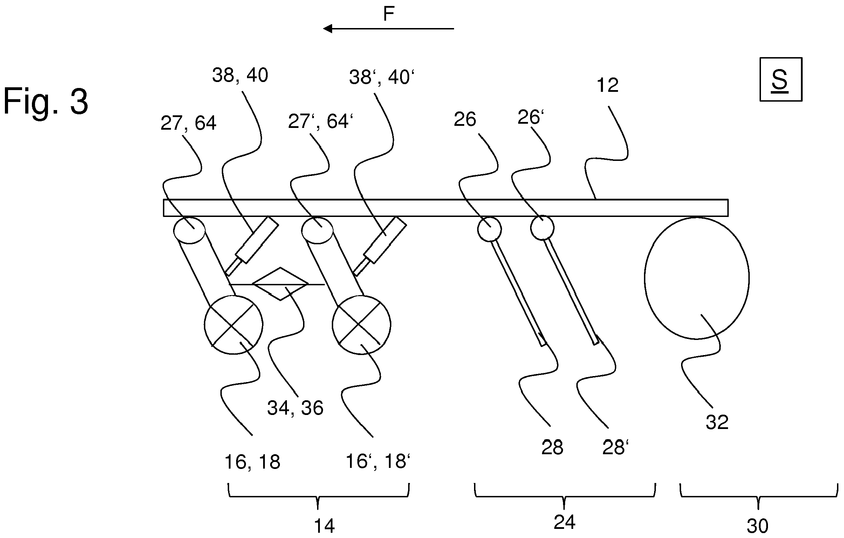

Die Figur 3 zeigt in einer schematischen Ansicht eine weitere Ausführungsform der landwirtschaftlichen Bodenbearbeitungsmaschine 10 mit einem Aufbau, welcher dem in Figur 2 gezeigten Aufbau der Bodenbearbeitungsmaschine 10 zumindest weitgehend entspricht.

Zusätzlich zu dem in Figur 2 gezeigten Ausführungsbeispiel sind die mindestens die mindestens zwei in Fahrtrichtung F hintereinander angeordneten rotierenden Schneidwerkzeuge 16, 16' in Form von Messerwalzen 18, 18' über wenigstens ein Koppelelement 34 miteinander gekoppelt werden. Insbesondere sind die Schwingen 20, 20' der jeweils rotierenden Schneidwerkzeuge 16, 16' über wenigstens ein Koppelelement 34 miteinander gekoppelt. Durch das wenigstens eine Koppelelement 34 kann eine starre oder eine bewegliche Koppelverbindung 36 ausgebildet werden. Bei einer starren Koppelverbindung kann das wenigstens eine Koppelelement 34 beispielsweise eine Strebe, einen Verbindungsarm oder dergleichen umfassen. Bei einer beweglichen Koppelverbindung kann das wenigstens eine Koppelelement 34 ein Federelement, einen elektrisch, pneumatisch oder hydraulisch arbeitenden Zylinder oder dergleichen umfassen.

Die Figur 4 zeigt in einer schematischen Ansicht eine Ausführungsform der Schwinge 20, an welchem ein rotierendes Schneidwerkzeug 16 vorgesehen ist. Das rotierende Schneidwerkzeug 16 ist in Form von einer Messerwalze 18 ausgebildet. Die Messerwalze 18 weist vorzugsweise quer zur Fahrtrichtung F orientierte Messer auf, welche Messer geradlinig und/oder spiralförmig verlaufen. Wahlweise kann die Messerwalze 18 einen geschlossenen Grundkörper aufweisen.

Die Konsole 22 setzt sich vorzugsweise aus zwei hier nicht dargestellten Gehäusehälften zusammen, welche einen Längsträger 42 der Schwinge 20 aufnehmen, d.h. die Konsole 22 bildet eine Lagereinheit für die Schwinge 20, insbesondere für den Längsträger 42 der Schwinge 20, aus. Die Konsole 22 als solche ist hingegen über einen Tragarm 66 (vgl. Figur 1) an die Rahmenkonstruktion 12 gelagert, wodurch eine Lagereinheit 62 ausgebildet wird. Vorzugsweise ist der Tragarm 66 auf einer Oberseite zumindest einer Gehäusehälfte der Konsole 22 vorgesehen. Die zwei Gehäusehälften sind beispielsweise mittels kraft-, form- und/oder stoffschlüssiger Verbindung miteinander verbunden. Vorzugsweise sind die zwei Gehäusehälften der Konsole 22 mittels Schrauben miteinander verbunden bzw. verschraubt. In der Konsole 22 sind weiter vier hier nicht dargestellte Elastomerlager bzw. Gummischnüre vorgesehen. Die vier Elastomerlager erzeugen eine Vorspannkraft, welche Vorspannkraft auf die Schwinge 20 und insbesondere auf die Messerwalze 18 übertragen wird, d.h. die Schwinge 20 ist mittels elastisch verformbaren und eine Vorspannkraft erzeugenden Lagerelemente an die Konsole 22 gelagert. Auch können die Elastomerlager bzw. Gummischnüre eine Überlast aufnehmen, wenn die Messerwalze 18 beispielsweise auf ein Hindernis und/oder auf Bodenwellen trifft, wodurch Beschädigungen und/oder Brüche oder dergleichen an der Messerwalze 18 vermieden werden können. Aufgrund der Elastomerlager kann somit die Schwinge 20 mit der daran angeordneten Messerwalze 18 nach oben ausweichen.

Zusätzlich oder wahlweise ist dem Linearelement 38 bzw. dessen Steuerung eine hier nicht dargestellte Überlastsicherung zugeordnet, welches beispielsweise in Form eines hydraulischen Federspeichers ausgebildet sein kann.

Das Linearelement 38, insbesondere die Zylinder 20, ist jeweils mit einer Steuereinrichtung S (vgl. Figur 1) verbunden, über welche das Linearelement 38 angesteuert wird. Wahlweise kann auch ein manuelles Verstellen möglich sein.

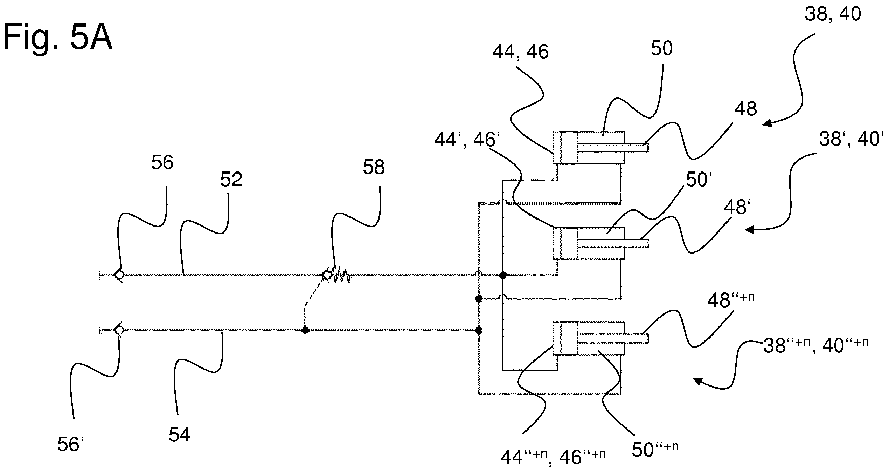

Die Figur 5A zeigt eine erste Ausführungsvariante eines Hydraulikschaltplans zur Ansteuerung der Linearelemente 38, 38', 38"⁺ⁿ, über welche Linearelemente 38, 38', 38"⁺ⁿ jeweils die Höhe der Konsole 22, 22' und damit die Höhe der Schwinge 20 mit den jeweils daran angeordneten Messerwalzen 46, 46' eingestellt werden kann. Wie es Figur 5A erkennen lässt, sind drei doppeltwirkende Zylinder 40, 40', 40"⁺ⁿ vorgesehen, welche mit beiden Druckseiten jeweils parallel zueinander geschaltet sind. Jeder der drei Zylinder 40, 40', 40"⁺ⁿ weist eine Kolbenseite 44, 44', 44"⁺ⁿ mit einem Kolbenraum 46, 46', 46"⁺ⁿ, eine Kolbenstange 48, 48', 48"⁺ⁿ sowie eine Ringseite 50, 50', 50"⁺ⁿ auf. Die Kolbenseiten 44, 44', 44"⁺ⁿ mit dem Kolbenraum 46, 46', 46"⁺ⁿ der Zylinder 40, 40', 40"⁺ⁿ sind jeweils über eine erste Druckleitung 52 miteinander verbunden bzw. fluidisch gekoppelt und die Ringseiten 50, 50', 50"⁺ⁿ der Zylinder 40, 40', 40"⁺ⁿ sind jeweils über eine zweite Druckleitung 54 miteinander verbunden bzw. fluidisch gekoppelt. Ein Beaufschlagen der Zylinder 40, 40', 40"⁺ⁿ, insbesondere der Kolbenseiten 44, 44', 44"⁺ⁿ mit dem Kolbenraum 46, 46', 46"⁺ⁿ über die erste Druckleitung 52 mit hydraulischem Druck bewirkt ein Ausfahren der Kolbenstangen 48, 48', 48"⁺ⁿ, so dass ein tieferes und damit ein aggressiveres Arbeiten der Messerwalzen 18, 18' im Boden veranlasst wird. Die Ringseiten 50, 50', 50"⁺ⁿ werden hingegen jeweils entlastet oder zumindest mit etwas geringerer Last beaufschlagt.

Ein flacheres Arbeiten der Messerwalzen 18, 18' im Boden wird dadurch erzeugt, indem die Kolbenseiten 44, 44', 44"⁺ⁿ mit dem Kolbenraum 46, 46', 46"⁺ⁿ über die erste Druckleitung 52 entlastet oder mit zumindest etwas geringerer Last beaufschlagt und die Ringleitungen 50, 50', 50"⁺ⁿ über die zweite Druckleitung 54 mit mehr Druck und/oder Last beaufschlagt wird, als die erste Druckleitung 52. Dadurch sind die Kolbenstangen 48, 48', 48"⁺ⁿ der Zylinder 40, 40', 40"⁺ⁿ jeweils zumindest abschnittsweise eingefahren, wodurch ein flacheres Arbeiten der Messerwalzen 18, 18' im Boden erzeugt wird.

Über das jeweils in den Zylindern 40, 40', 40"⁺ⁿ eingestellte Druckniveau, welches sich beispielsweise durch Beaufschlagen der Kolbenseiten 44, 44', 44"⁺ⁿ mit dem Kolbenraum 46, 46', 46"⁺ⁿ über die erste Druckleitung 52 mit Druck einstellt, und durch die in der Konsole 22 vorgesehenen Elastomerlager bzw. Gummischnüre wird jeweils eine Vorspannkraft und damit eine Anpresskraft auf die Messerwalzen 18, 18' erzeugt. Die Vorspannkraft und die Anpresskraft kann in Abhängigkeit des eingestellten Druckniveaus in den Zylindern 40, 40', 40"⁺ⁿ, insbesondere im Kolbenraum 46, 46', 46"⁺ⁿ variiert werden. Die Ansteuerung der Zylinder 40, 40', 40"⁺ⁿ erfolgt über eine Steuereinrichtung S, welches als doppeltwirkendes Steuergerät ausgebildet ist. Überlasten, welche beispielsweise beim Auftreffen der Messerwalzen 18, 18' auf ein Hindernis entstehen, werden gemäß vorliegendem Hydraulikplan hauptsächlich über die Elastomerlager bzw. Gummischnüre aufgenommen.

Die erste Druckleitung 52 und die zweite Druckleitung 54 weisen jeweils ein Rückschlagventil 56, 56' auf. Zusätzlich ist in der ersten Druckleitung 52 ein federbelastetes Rückschlagventil 58 vorgesehen, welches mit dem Rückschlagventil 56 in Reihe geschaltet ist. Weiter steht das federbelastete Rückschlagventil 58 mit der zweiten Druckleitung 54 in Verbindung. Die Rückschlagventile 56, 56' und das federbelastete Rückschlagventil 58 bewirken, dass bei Beaufschlagen der Kolbenseite 44, 44', 44"⁺ⁿ mit dem Kolbenraum 46, 46', 46"⁺ⁿ über die erste Druckleitung 52 mit Druck die zweite Druckleitung 54 abgesperrt wird sowie dass bei Beaufschlagen der Ringseite 50, 50', 50"⁺ⁿ mit Druck über die zweite Druckleitung 54 die erste Druckleitung 52 abgesperrt wird.

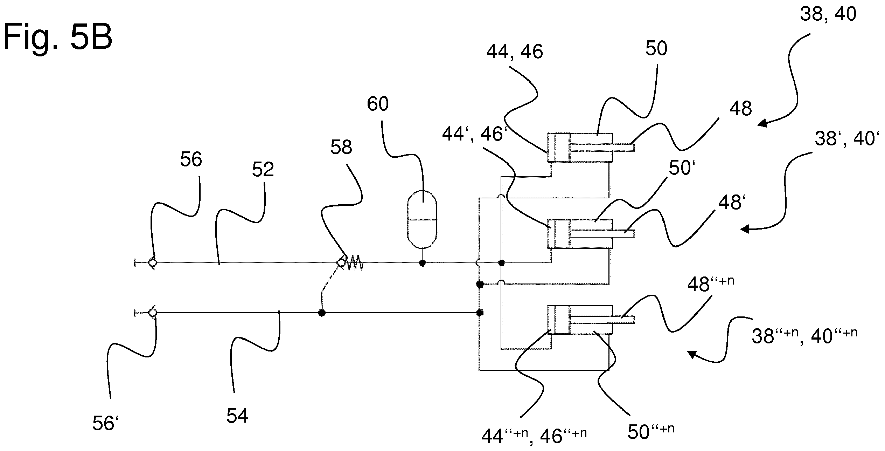

Die in Figur 5B gezeigte zweite Variante eines Hydraulikschaltplans umfasst sämtliche Komponenten bzw. den gleichen Aufbau gemäß dem in Figur 5A gezeigten Hydraulikschaltplan zur Ansteuerung der Linearelemente 38, 38', 38"⁺ⁿ. Zusätzlich umfasst die erste Druckleitung 52 einen Druckspeicher 90, welcher zwischen dem federbelasteten Rückschlagventil 58 und der Kolbenseite 44, 44', 44"⁺ⁿ mit dem Kolbenraum 46, 46', 46"⁺ⁿ angeordnet ist und welcher mit dem federbelasteten Rückschlagventil 58 in Reihe geschaltet ist. Der Druckspeicher 60 bewirkt eine bessere Bodenanpassung der Schwingen 20 mit der daran angeordneten Messerwalze 18, 18', wodurch jeweils ein Volumenausgleich bei Stellbewegungen der Zylinder 40, 40', 40"⁺ⁿ erfolgt, was vor allem bei Bodenwellen oder dergleichen Bodenunebenheiten vorteilhaft ist. Somit können beispielsweise Kräfte, welche beim Auftreffen der Messerwalzen 18, 18' auf ein Hindernis und/oder auf Bodenwellen entstehen, besser ausgeglichen werden, indem es zu einer schnellen Entlastung der Kolbenseiten 44, 44', 44"⁺ⁿ mit dem Kolbenraum 46, 46', 46"⁺ⁿ kommt.

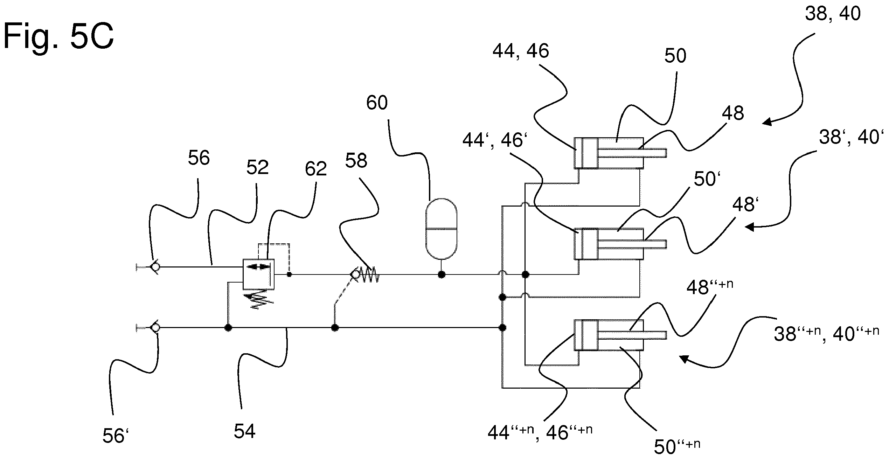

Der in Figur 5C gezeigte Hydraulikschaltplan (dritte Variante) umfasst sämtliche Komponenten bzw. den gleichen Aufbau gemäß dem in Figur 5B gezeigten Hydraulikschaltplan zur Ansteuerung der Linearelemente 38, 38', 38"⁺ⁿ. Zusätzlich ist beim Hydraulikschaltplan gemäß Figur 5C ein Druckventil 62 vorgesehen, welches mit der ersten Druckleitung 52 und mit der zweiten Druckleitung 54 verbunden bzw. fluidisch gekoppelt ist. Mittels des Druckventils 62 werden die hydraulische Vorspannung bzw. die Vorspannungskraft und/oder die Anpresskraft der Konsole 22 und damit der Schwinge 20 mit der jeweils daran angeordneten Messerwalze 18, 18' angepasst und/oder eingestellt. Das Druckventil 62 dient dazu, dass ein voreingestellter bzw. definierter Druck in der ersten Druckleitung 52 und in der zweiten Druckleitung 54 nicht überschritten wird. Das Druckventil 62 kann fest eingestellt oder verstellbar ausgebildet sein, wobei die Verstellung manuell oder elektro-proportional ausgebildet sein kann.

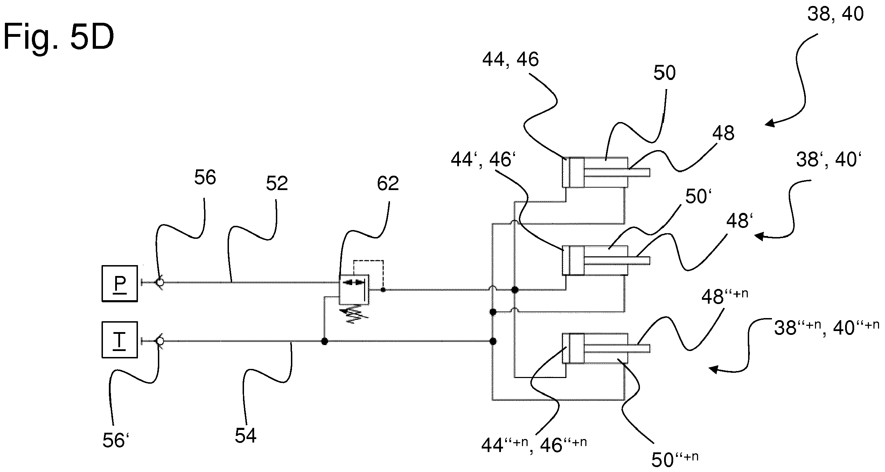

Durch Figur 5D ist eine vierte Variante eines Hydraulikschaltplans zur Ansteuerung der Linearelemente 38, 38', 38"⁺ⁿ, insbesondere der Zylinder 40, 40', 40"⁺ⁿ abgebildet, wobei über die Linearelemente 38, 38', 38"⁺ⁿ jeweils die Höhe der Konsole 22 und damit die Höhe der Schwinge 20 mit der daran angeordneten Messerwalze 18, 18' eingestellt wird.

Gemäß Figur 5D sind drei Linearelemente 38, 38', 38"⁺ⁿ, insbesondere drei Zylinder 40, 40', 40"⁺ⁿ vorgesehen, welche parallel zueinander geschaltet sind. Jeder der drei Zylinder 40, 40', 40"⁺ⁿ weist eine Kolbenseite 44, 44', 44"⁺ⁿ mit einem Kolbenraum 46, 46', 46", eine Kolbenstange 48, 48", 48"⁺ⁿ sowie eine Ringseite 50, 50', 50"⁺ⁿ auf. Die Kolbenseiten 44, 44', 44"⁺ⁿ mit dem Kolbenraum 46, 46', 46"⁺ⁿ der Zylinder 40, 40', 40"⁺ⁿ sind jeweils über eine erste Druckleitung 52 miteinander verbunden bzw. fluidisch gekoppelt und die Ringseiten 50, 50', 50"⁺ⁿ der Zylinder 40, 40', 40"⁺ⁿ sind jeweils über eine zweite Druckleitung 54 miteinander verbunden bzw. fluidisch gekoppelt. Die erste Druckleitung 52 ist mit einer Druckquelle P und die zweite Druckleitung 54 ist mit einem Rücklauf T verbunden, d.h. die Kolbenseite 44, 44', 44"⁺ⁿ mit dem Kolbenraum 46, 46', 46"⁺ⁿ wird über die Druckquelle P mit einem definierten Druck beaufschlagt. Der Rücklauf T dient dazu, dass das Fluid über die zweite Druckleitung 54 in einen hier nicht dargestellten Tank zurückläuft. Die erste Druckleitung 52 und die zweite Druckleitung 54 sind mit einem Druckventil 62 miteinander verbunden, wodurch jeweils das Druckniveau in den Zylindern 40, 40', 40"⁺ⁿ eingestellt wird. Zusätzlich sorgt das Druckventil 62 dazu, dass ein voreingestellter Druck nicht überschritten wird. Durch das Einstellen des Druckniveaus in den Zylindern 40, 40', 40"⁺ⁿ wird auch die Aggressivität der Messerwalzen 18, 18' eingestellt, wobei eine weit ausgefahrene Kolbenstange 48, 48', 48"⁺ⁿ ein tieferes und damit ein aggressiveres Arbeiten der Messerwalzen 18, 18' im Boden und eine eingefahrene Kolbenstange 48, 48', 48"⁺ⁿ ein flacheres und ein wenig aggressiveres Arbeiten der Messerwalzen 18, 18' im Boden ermöglicht.

Das Druckventil 62 kann fest eingestellt oder verstellbar ausgebildet sein, wobei die Verstellung manuell oder elektro-proportional ausgebildet sein kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 10: Bodenbearbeitungsmaschine
- 12: Rahmenkonstruktion
- 14: Schneidabschnitt
- 16: Schneidwerkzeug
- 16': Schneidwerkzeug
- 18: Messerwalze
- 18': Messerwalze
- 20: Schwinge
- 22: Konsole
- 24: Zinkenabschnitt
- 26: Träger
- 26': Träger
- 27: Weiterer Träger
- 27': Weiterer Träger
- 28: Zinken
- 28': Zinken
- 30: Rückverfestigungsabschnitt
- 32: Packerwalze
- 34: Koppelelement
- 36: Koppelverbindung
- 38: Linearelement
- 40: Zylinder
- 42: Längsträger
- 44: Kolbenseite
- 44': Kolbenseite
- 44"⁺ⁿ: Kolbenseite
- 46: Kolbenraum
- 46': Kolbenraum
- 46"⁺ⁿ: Kolbenraum
- 48: Kolbenstange
- 48': Kolbenstange
- 48"⁺ⁿ: Kolbenstange
- 50: Ringseite
- 50': Ringseite
- 50"⁺ⁿ: Ringseite
- 52: Erste Druckleitung
- 54: Zweite Druckleitung
- 56: Rückschlagventil
- 56': Rückschlagventil
- 58: Federbelastetes Rückschlagventil
- 60: Druckspeicher
- 62: Druckventil
- 64: Lagereinheit
- 64': Lagereinheit
- 66: Tragarm

- F: Fahrtrichtung
- P: Druckquelle
- S: Steuereinrichtung
- T: Rücklauf

## Patentansprüche

1. Landwirtschaftliche Bodenbearbeitungsmaschine (10) zumindest umfassend,
- eine Rahmenkonstruktion (12) zum Tragen mehrerer Komponenten, insbesondere zur Bodenbearbeitung,
- zumindest einen Schneidabschnitt (14) zur Zerkleinerung von Pflanzenrückbeständen auf der Oberfläche eines zu bearbeitenden und/oder von der Bodenbearbeitungsmaschine zu überfahrenden Bodens,
- zumindest einen dem Schneidabschnitt (14) in Fahrtrichtung (F) der Bodenbearbeitungsmaschine (10) nachgeordneten Rückverfestigungsabschnitt (30) zur Rückverfestigung des gelockerten und/oder eingeebneten Bodens, **dadurch gekennzeichnet, dass** der zumindest eine Schneidabschnitt (14) mindestens ein rotierendes Schneidwerkzeug (16) umfasst, welches über eine Schwinge (20) schwenkbar an die Rahmenkonstruktion (12) gelagert ist.

2. Bodenbearbeitungsmaschine nach Anspruch 1, bei welcher der Schwinge (20) eine Konsole (22) zugeordnet ist, über welche die Schwinge (20) mit dem mindestens einen rotierenden Schneidwerkzeug (16) an die Rahmenkonstruktion (12) gelagert ist.

3. Bodenbearbeitungsmaschine nach Anspruch 1 oder 2, bei welcher die Schwinge (20) mittels elastisch verformbarer und eine Vorspannkraft erzeugende Lagerelemente an die Konsole (22) gelagert ist.

4. Bodenbearbeitungsmaschine nach einem der vorherigen Ansprüche, bei welcher der Konsole (22) zumindest ein Linearelement (58) zugeordnet ist, so dass die Konsole (22) und damit die Schwinge (20) gegenüber der Rahmenkonstruktion (12) höhenverstellbar ausgebildet sind.

5. Bodenbearbeitungsmaschine nach einem der vorherigen Ansprüche, bei welcher mittels des zumindest einen Linearelements (38) eine Anpresskraft auf das mindestens eine rotierende Schneidwerkzeug (16) erzeugbar ist, welche Anpresskraft variabel einstellbar ist.

6. Bodenbearbeitungsmaschine nach einem der vorherigen Ansprüche, bei welcher dem zumindest einen Linearelement (38) eine mechanische und/oder hydraulische Überlastsicherung zur Begrenzung der Anpresskraft auf das mindestens eine rotierende Schneidwerkzeug (16) zugeordnet ist.

7. Bodenbearbeitungsmaschine nach einem der vorherigen Ansprüche, bei welcher dem Schneidabschnitt (14) in Fahrtrichtung (F) der Bodenbearbeitungsmaschine (10) ein Zinkenabschnitt (24) zur Verteilung der zerkleinerten Pflanzenrückstände und zur Einebnung der Oberfläche des Bodens nachgeordnet ist, wobei dem Zinkenabschnitt (24) in Fahrtrichtung (F) der Bodenbearbeitungsmaschine (10) der Rückverfestigungsabschnitt (30) zur Rückverfestigung des gelockerten und/oder eingeebneten Bodens nachgeordnet ist.

8. Bodenbearbeitungsmaschine nach einem der vorherigen Ansprüche, bei welcher der zumindest eine Schneidabschnitt (14) mindestens zwei rotierende Schneidwerkzeuge (16, 16') umfasst, welche Schneidwerkzeuge (16, 16') jeweils einzeln über eine Schwinge (20) an die Rahmenkonstruktion (12) gelagert sind.

9. Bodenbearbeitungsmaschine nach Anspruch 8, bei welcher die zumindest zwei rotierenden Schneidwerkzeuge (16, 16') in Fahrtrichtung (F) hintereinander oder quer zur Fahrtrichtung (F) versetzt hintereinander angeordnet sind.

10. Bodenbearbeitungsmaschine nach einem der Ansprüche 7 bis 9, bei welcher die Schwingen (20) der zumindest zwei rotierenden Schneidwerkzeuge (16, 16') über wenigstens ein Koppelelement (34) miteinander koppelbar sind, wobei durch das wenigstens eine Koppelelement (34) eine starre oder bewegliche Koppelverbindung (36) ausgebildet wird.

11. Bodenbearbeitungsmaschine nach einem der vorherigen, bei welcher das mindestens eine rotierende Schneidwerkzeug (16) als rotierende Messerwalze (18) ausgebildet ist.

12. Bodenbearbeitungsmaschine nach einem der vorherigen Ansprüche, welche mehrere zueinander klappbare Maschinenabschnitte umfasst, wobei jedem der Maschinenabschnitte zumindest ein Schneidabschnitt (14) mit zumindest einer Schwinge (20) mit mindestens einem rotierenden Schneidwerkzeug (16) und/oder einen Zinkenabschnitt (24) und einem Rückverfestigungsabschnitt (40) zugeordnet ist.

13. Verfahren zur landwirtschaftlichen Bodenbearbeitung, zumindest umfassend die Schritte:
- Zerkleinern von Pflanzenrückständen an der Oberfläche des Bodens mittels eines Schneidabschnittes (14), welcher zumindest ein rotierendes Schneidwerkzeug (16) umfasst, welches Schneidwerkzeug (16) über eine Schwinge (20) an die Rahmenkonstruktion (12) gelagert ist, sowie
- Rückverfestigen des gelockerten Bodens mittels eines dem Zinkenabschnitt (24) in Fahrtrichtung (F) nachfolgenden Rückverfestigungsabschnittes (32).

14. Verfahren nach Anspruch 13, zumindest umfassend die Schritte:
- Bereitstellen mindestens eines rotierenden Schneidwerkzeuges (16), welches über ein Schwinge (20) an eine Rahmenkonstruktion (12) einer landwirtschaftlichen Bodenbearbeitungsmaschine (10) gelagert ist;
- Ansteuerung zumindest eines Stellelements (28), so dass die Höhe des rotierenden Schneidwerkzeugs (16) in Bezug die Rahmenkonstruktion (12) bzw. auf eine Oberfläche eines zu bearbeitenden Bodens eingestellt wird, wobei zugleich über die Ansteuerung des zumindest einen Stellelements (16) die Anpresskraft des mindestens einen rotierenden Schneidwerkzeugs (16) in Bezug auf den Boden eingestellt und angepasst wird.

15. Verfahren nach Anspruch 13 oder 14, bei dem nach dem Zerkleinern der Pflanzenrückständen an der Oberfläche des Bodens mittels des Schneidabschnittes (14) ein Verteilen von Pflanzenrückständen und Einebnen der Oberfläche des Bodens mittels zumindest eines dem Schneidabschnitts (14) in Fahrtrichtung (F) folgenden Zinkenabschnitts (14) vorgesehen ist.
